# EUROPÄISCHE PATENTANMELDUNG

(11) **EP 2 953 067 A1**
(43) Veröffentlichungstag der Anmeldung: **09.12.2015**
(21) Anmeldenummer: 15170458.2
(22) Anmeldetag: 03.06.2015
(51) Int. Cl.: G06Q 10/00

(54) **VERFAHREN UND SYSTEM ZUR REPARATUR- UND/ODER WARTUNG VON FAHRRÄDERN**

(30) Priorität: 05.06.2014 DE 102014210780
(71) Anmelder: Taplan, Matthias, 80538 München (DE)
(72) Erfinder: TAPLAN, Matthias, 80538 München (DE)
(74) Vertreter: Wegner, Hans

(57) **Zusammenfassung**

Die vorliegende Erfindung bezieht sich auf ein Verfahren zur Wartung und / oder Reparatur zumindest eines Fahrrads (110) von einer Vielzahl von im Feld verteilten Fahrrädern (110) mit ersten Identifizierungsdaten, wobei das Verfahren die folgenden Schritte umfasst:
a. Empfangen (140) einer Wartungs- und / oder Reparaturanfrage über ein Netzwerk, wobei die Anfrage die ersten Identifizierungsdaten des Fahrrads (110) umfasst;
b. Versenden (150) eines Wartungs- und / oder Reparaturauftrags an eine mobile Wartungs- und Reparatureinheit (130) mit einer Angabe eines Orts, an dem das Fahrrad (110) zur Wartung und / oder Reparatur bereitsteht.
c. Empfangen einer Bestätigung, dass die mobile Wartungs- und Reparatureinheit (130) an dem Ort eingetroffen ist.

## Beschreibung

### 1. Technisches Gebiet

Die vorliegende Erfindung bezieht sich auf ein Verfahren und System zur Reparatur- und /oder Wartung von im Feld verteilten Fahrrädern mittels mobiler Reparatur- und Wartungseinheiten.

### 2. Technischer Hintergrund

Fahrräder sind seit jeher ein fester Bestandteil des urbanen Individualverkehrs und werden neben privaten Fahrten auch zu geschäftlichen Zwecken eingesetzt. Fahrradkuriere befördern Güter und Pakete während Büroangestellte Fahrräder für die Fahrt in den Betrieb oder zu einem Kunden nutzen. Ein zuverlässiges Funktionieren wie auch eine schnelle Reparatur im Falle eines Schadens sind daher von großer Bedeutung.

Fahrräder werden aufgrund hoher Ansprüche der Nutzer technisch zunehmend komplexer. Durch den Einsatz von technologisch fortgeschrittenen Bauteilen, wie beispielsweise hydraulischen Scheibenbremsen, Federgabeln, komplizierten Gangschaltungen etc. erhöht sich die Anzahl an benötigten Ersatzteilen immens. Zudem gestaltet sich die Reparatur oder der Austausch dieser technisch komplexer werdenden Bauteile immer schwieriger und ist meist nur noch durch geschultes Fachpersonal adäquat zu bewerkstelligen. Aber selbst für Fachleute stellt die Auswahl passender Ersatzteile, aufgrund der Vielzahl von unterschiedlichen Herstellern und der daraus resultierenden noch größeren Anzahl zur Verfügung stehender Ersatzteile, eine Herausforderung dar. Beispielsweise lassen sich Ritzel für Gangschaltungen unterschiedlicher Hersteller optisch kaum noch unterscheiden. Dasselbe gilt für Bremsbeläge oder Scheiben für Scheibenbremsen. Nicht selten wird daher ein unpassendes oder ungewünschtes Ersatzteil bei der Durchführung eines herkömmlichen Wartungs- und / oder Reparaturauftrag verbaut. Falsche Ersatzteile können aber erheblichen Schaden verursachen. Wenn beispielsweise unpassende Ersatzteile für eine Bremse verbaut werden, kann dies zu schweren Verkehrsunfällen führen, da durch Verwendung eines falschen Ersatzteils einer Bremse deren Bremskraft stark vermindert werden kann.

Fachwerkstätten, die die Reparatur eines defekten Fahrrads durchführen, sind oftmals nur Saisonbetriebe, die im Winter geschlossen sind. Zudem sind die Öffnungszeiten, gerade für die oben genannten Büroangestellten, oft nur schwer mit dem alltäglichen Arbeitsleben zu vereinbaren. Dies führt unter anderem dazu, dass Servicetermine nicht wahrgenommen werden können und Fahrradfahrer oftmals mit schlecht oder überhaupt nicht gewarteten Fahrrädern am Straßenverkehr teilnehmen.

Der vorliegenden Erfindung liegt daher das Problem zugrunde, eine verbesserte Lösung für die Wartung- und /oder Reparatur von Fahrrädern zu schaffen.

### 3. Zusammenfassung der Erfindung

Dieses Problem wird durch die unabhängigen Ansprüche der vorliegenden Anmeldung gelöst. In einem Ausführungsbeispiel betrifft die vorliegende Erfindung ein Verfahren zur Wartung und / oder Reparatur zumindest eines Fahrrads von einer Vielzahl von im Feld verteilten Fahrrädern mit ersten Identifizierungsdaten, wobei das Verfahren die folgenden Schritte umfasst:
a. Empfangen einer Wartungs- und / oder Reparaturanfrage über ein Netzwerk, wobei die Anfrage die ersten Identifizierungsdaten des Fahrrads umfasst;
b. Versenden eines Wartungs- und / oder Reparaturauftrags an eine mobile Wartungs- und Reparatureinheit mit einer Angabe eines Orts, an dem das Fahrrad zur Wartung und / oder Reparatur bereitsteht.
c. Empfangen einer Bestätigung, dass die mobile Wartungs- und Reparatureinheit an dem Ort eingetroffen ist.

Das genannte Verfahren zur Wartung und / oder Reparatur ist in der Lage, Wartungs- und/oder Reparaturanfragen für Fahrräder von einem Nutzer eines Fahrrads zu empfangen und diese in Form von Wartungs- und / oder Reparaturaufträgen an eine oder mehrere mobile Wartungs- und Reparatureinheiten zu übermitteln. Die Wartungs- und / oder Reparaturanfrage kann dabei von dem Nutzer beispielsweise durch Verwendung einer Internetseite übermittelt werden. Durch erste Identifizierungsdaten, die im einfachsten Fall z.B. die Rahmennummer des Fahrrads sein können, wird der Auftrag dem entsprechenden Fahrrad eindeutig zugeordnet. Die Identifizierungsdaten werden dabei von dem Nutzer beispielsweise in ein Textfeld der oben genannten Internetseite eingetragen und übermittelt. Der Vorgang der Erstellung eines Wartungs- und / oder Reparaturauftrags wird zusätzlich dadurch vereinfacht, dass der Nutzer auf die selbe Weise auch den momentanen Standort des zu wartenden und / oder zu reparierenden Fahrrads übermitteln kann. Der Vorteil des Verfahrens besteht darin, dass ein Nutzer eine Wartungs- und Reparatureinheit zu einem beliebigen Ort, an welchem z.B. ein Schaden am Fahrrad entstanden ist, bestellen kann. Dadurch wird dem Nutzer ein aufwändiges Transportieren seines defekten Fahrrads erspart. Somit wird also die Nutzung eines Wartungs- und / oder Reparaturverfahrens für Fahrräder signifikant vereinfacht und dadurch die Effizienz und Mobilität der Fahrräder erhöht.

Durch Übermittlung einer Bestätigung, z.B. in Form einer Nachricht als E-Mail etc., kann eine mobile Reparatur- und Wartungseinheit die Ankunft am gewünschten Ort signalisieren. Somit kontrolliert das Verfahren, ob und wann eine mobile Wartungs- und Reparatureinheit an einem gewünschten Standort eingetroffen ist. Dies vereinfacht insbesondere die Disposition vieler unterschiedlicher Wartungs- und / oder Reparaturaufträge bei Einsatz einer Vielzahl von mobilen Wartungs- und Reparatureinheiten.

Vorzugsweise ermöglicht das oben genannte Verfahren mit dem im Schritt b versandten Wartungs- und / oder Reparaturauftrag keine Identifizierung des Fahrrads.

Dadurch wird gewährleistet, dass eine Wartungs- und Reparatureinheit vor Ort eine zusätzliche Identifikation des zu wartenden und / oder zu reparierenden Fahrrads durchführen muss. Diese vorteilhafte Ausgestaltung führt dazu, dass ein weiterer Kontrollmechanismus entsteht, der sicherstellt, dass nur das gewünschte Fahrrad gewartet und / oder repariert wird. Die Verwechslungsgefahr, dass ein falsches Fahrrad gewartet und / oder repariert wird, wird somit merklich reduziert.

In einem weiteren Ausführungsbeispiel des erfindungsgemäßen Verfahrens umfasst das Empfangen der Bestätigung das Empfangen zweiter Identifizierungsdaten des Fahrrads. Vorzugsweise sind die zweiten Identifizierungsdaten von einem Lesegerät durch maschinelles Lesen eines Identifizierungselements am Fahrrad erzeugt worden.

Die zweiten Identifizierungsdaten, die z.B. ein auf das Fahrrad aufgeklebter QR-Code oder Ähnliches sein können, erlauben nun eine systemgestützte und darum fehlerreduzierte, zweite Identifikation des zu wartenden und / oder zu reparierenden Fahrrads. Diese zweiten Identifizierungsdaten können beispielsweise sensor-basiert durch einen QR-Code-Scanner, einen Barcode-Scanner oder durch eine simple Kamera abgelesen werden. Wie oben bereits erwähnt, wird hierdurch ein Kontrollmechanismus geschaffen, welcher eine eindeutige Zuordnung des zu wartenden und / oder zu reparierenden Fahrrads zu dem entsprechenden Auftrag sicherstellt. Eine Verwechslungsgefahr und der damit verbundene mögliche Einbau von unpassenden Ersatzteilen wird hierdurch signifikant verringert und die Mobilität des Fahrrads dadurch erhöht. Außerdem wirkt sich dies positiv auf die Verkehrssicherheit des Fahrrads aus, da Mängeln durch den Verbau unpassender Teile vorgebeugt wird.

Vorzugsweise umfasst das Verfahren ferner den Schritt des Bereitstellens einer Teileliste des identifizierten Fahrrads in Erwiderung auf den Empfang der zweiten Identifizierung. In einem weiteren Ausführungsbeispiel weist das Verfahren ferner den Schritt des Empfangens einer Mitteilung über zumindest eines bei der Wartung und / oder Reparatur verwendeten Fahrradteils auf.

Ist das Fahrrad durch das Ablesen der zweiten Identifizierungsdaten durch eine mobile Wartungs- und Reparatureinheit identifiziert worden, so wird für die mobile Wartungs- und Reparatureinheit nach Übermittlung dieser Daten eine Teileliste mit z. B. benötigen Ersatzteilen zur Durchführung der Wartung und / oder Reparatur bereitgestellt. Möglich ist auch, dass die Teileliste alle im Fahrrad enthaltenen Teile aufweist. Erst durch Bereitstellen der Teileliste nach Übermittlung der zweiten Identifizierungsdaten wird sichergestellt, dass es sich tatsächlich um die gewünschte Teileliste handelt. Dadurch wird Verwechslungen von Teilelisten vorgebeugt. Die Teileliste kann dabei schon zu einem vorherigen Zeitpunkt an die mobile Wartungs- und Reparatureinheit übermittelt worden sein. Sie wird aber vorzugsweise erst nach der zweiten Identifizierung einsehbar. Da die Teileliste alle in einem Fahrrad enthaltenen Teile aufweisen kann, erleichtert dies eine Wiederherstellung des Originalzustands des Fahrrads. Wenn beispielsweise zusätzliche Teile an einem Fahrrad verbaut wurden (z. B. nach einer Reparatur im Ausland während eines Urlaubs), so können passende Originalteile anhand der Teileliste schnell gefunden werden und zum Austausch der Nicht-Originalteile verwendet werden.

Werden nun ein oder mehrere Fahrradteile, auch Ersatzteile genannt, während der Wartung- und / oder Reparatur durch die mobile Wartungs- und Reparatureinheit verbaut, so teilt sie dies in Form einer Mitteilung mit, z. B. in Form einer E-Mail oder Ähnlichem. Die Ausgestaltung bringt den Vorteil mit sich, dass stets der aktuelle Teilebestand einer mobilen Wartungs- und Reparatureinheit bekannt ist. Dadurch können passende Folgeaufträge für die mobile Wartungs- und Reparatureinheiten aus einer Vielzahl von Aufträgen effizienter selektiert werden. Nur wenn noch ausreichend Ersatzteile für einen weiteren anstehenden Reparatur- und / oder Wartungsauftrag in einer mobilen Wartungs- und Reparatureinheit vorhanden sind, kann diese den entsprechenden Auftrag übernehmen.

Ein weiterer Vorteil der Übermittlung der verwendeten Ersatzteile ist, dass stets bekannt ist, welche Teile an einem Fahrrad verbaut wurden. Verfügen Ersatzteile z. B. über eine vorab bekannte, begrenzte Lebensdauer, so können beispielsweise zukünftig automatische Wartungs- und / oder Reparaturaufträge generiert werden. Somit wird stets für ein ordnungsgemäß gewartetes Fahrrad gesorgt, was zu einer deutlich verbesserten Verkehrssicherheit des Fahrrads führt. Dies wird unter anderem auch dadurch ermöglicht, dass alle Fahrräder bzw. die zugehörigen ersten und / oder zweiten Identifizierungsdaten von dem Verfahren z. B. in einer Datenbank gespeichert werden können.

In einem weiteren Ausführungsbeispiel des vorliegenden Verfahrens weist die Mitteilung eine Teile-Identifikationsnummer des zumindest einen bei der Wartung und / oder Reparatur verwendeten Fahrradteils auf.

Durch Verknüpfung eines Fahrradteils mit einer Teile-Identifikationsnummer wird gewährleistet, dass alle verwalteten Fahrradteile eindeutig identifiziert werden können. Dadurch sind Verwechslungen ausgeschlossen und dem Verbau eines nicht passenden Ersatzteils wird vorgebeugt. Auch dies führt zu einer Verbesserung der Verkehrssicherheit der einzelnen Fahrräder.

Vorzugsweise weist das erfindungsgemäße Verfahren ferner den Schritt des Auswählens eines Austauschteils für das in der Mitteilung enthaltene, zumindest eine bei der Wartung und / oder Reparatur verwendete Fahrradteil auf.

Damit der Fahrradteilbestand einer der zumindest einen mobilen Wartungs- und Reparatureinheit nach Entnahme von Fahrradteilen zur Durchführung von Wartungs- und / oder Reparaturarbeiten schnell wieder aufgefüllt werden kann, wird bei Erhalt der Mitteilung über die Entnahme eines Fahrradteils ein passendes Austauschteil ausgewählt, und ermöglicht so, beispielsweise bei Ankunft der mobilen Reparatur- und Wartungseinheit in einem zentralen Austauschteilelager ein direktes Beladen mit dem Austauschteil. Hierdurch wird vorteilhaft ermöglicht, dass die mobile Wartungs- und Reparatureinheit sich nur so kurz wie nötig im oder an dem Austauschteilelager aufhalten muss. Dadurch wird die Anzahl an durchführbaren Wartungs- und / oder Reparaturaufträgen (z.B. pro Tag) erhöht, was zu einer höheren Anzahl an korrekt gewarteten und / oder reparierten Fahrräder im Straßenverkehr führt.

Vorzugsweise umfasst der Schritt b des erfindungsgemäßen Verfahrens die Auswahl einer mobilen Wartungs- und Reparatureinheit aus einer Mehrzahl von mobilen Wartungs- und Reparatureinheiten anhand zumindest eines vorgegebenen Kriteriums. Vorzugsweise umfasst das zumindest eine Kriterium eines oder mehrere der folgenden Kriterien:
i Standorte der Mehrzahl von mobilen Wartungs- und Reparatureinheiten;
ii Bestände der in der Mehrzahl von mobilen Wartungs- und Reparatureinheiten vorhandenen Teile;
iii. eine in der Wartungs- und / oder Reparaturanfrage enthaltene Zeitangabe, zu der die Wartung und / oder Reparatur durchgeführt werden soll.

In einem weiteren Ausführungsbeispiel berücksichtigt das Kriterium ii ferner einen Typ und / oder das Fahrrad, der bzw. das durch die erste Identifizierung identifiziert worden ist. In einer weiteren bevorzugten Ausführungsform des erfindungsgemäßen Verfahrens hat bei der Auswahl der mobilen Wartungs- und Reparatureinheit das Kriterium ii die höchste Priorität, gefolgt vom Kriterium iii, gefolgt vom Kriterium i.

Durch Einbeziehung der oben genannten Kriterien ist das beschriebene Ausführungsbeispiels eines erfindungsgemäßen Verfahrens in der Lage, priorisiert eine passende Wartungs- und Reparatureinheit für einen Wartungs- und / oder Reparaturauftrag auszuwählen. Einer mobilen Wartungs- und Reparatureinheit wird ein Wartungs- und / oder Reparaturauftrag nur dann zugewiesen, wenn, abhängig vom Fahrrad und / oder dem Fahrradtyp, die passenden Teile in besagter mobiler Wartungs- und Reparatureinheit vorrätig sind. Sind diese nicht vorrätig, so wählt das vorliegende Verfahren im Regelfall eine andere, mit passenden Teilen bestückte mobile Wartungs- und Reparatureinheit aus. Kommen gemäß dieses Kriteriums mehrere Wartungs- und Reparatureinheiten zur Durchführung des Wartungs- und / oder Reparaturauftrages in Frage, so berücksichtigt das Verfahren zusätzlich den aktuellen Standort der Wartungs- und Reparatureinheiten. Der Auftrag wird dann bevorzugt der dem zu wartenden und / oder zu reparierenden Fahrrads näher liegenden Wartungs- und Reparatureinheit zugewiesen. Denkbar ist aber auch jegliche andere Art der Gewichtung der Prioritäten. Möglich wäre z.B. insbesondere die Wünsche von Kunden hinsichtlich Ort und Uhrzeit einer durchzuführenden Wartung und / oder Reparatur höher priorisiert zu berücksichtigen.

Weiterhin wird durch das Verfahren zusätzlich berücksichtigt, zu welchem Zeitpunkt die Wartung und / oder Reparatur von dem Auftragübermittelnden Nutzer gewünscht wird. Ist es einer sich in der Nähe befindenden Wartungs- und Reparatureinheit aufgrund von einem oder mehreren zuvor durchzuführenden Wartungs- und / oder Reparaturaufträgen nicht möglich, zu einem von dem Nutzer gewünschten Zeitpunkt die Wartung und / oder Reparatur durchzuführen, so kann durch das Verfahren eine andere Wartungs- und Reparatureinheit für den Auftrag vorgesehen werden.

In einem weiteren Ausführungsbeispiel weist das Verfahren den Schritt des Empfangens einer Annahme des Wartungs- und / oder Reparaturauftrags von der mobilen Wartungs- und Reparatureinheit auf. Vorzugsweise umfassen die Schritte des Empfangens und Versendens die Verwendung eines Mobilfunknetzwerks und / oder des Internet.

Wird eine mobile Wartungs- und Reparatureinheit durch das oben beschriebene Auswahlverfahren für einen Wartungs- und / oder Reparaturauftrag vorgesehen, so wird ihr dieser, vorzugsweise über ein Mobilfunknetzwerk und / oder über das Internet oder Ähnlichem, übermittelt. Die Übermittlung findet hierbei bevorzugt elektronisch statt. Denkbar sind aber auch alle anderen Übermittlungsmöglichkeiten, z.B. per Telefon. Entscheidet sich die mobile Wartungs- und Reparatureinheit den ihr übermittelten Wartungs- und / oder Reparaturauftrag anzunehmen, so sendet sie ihrerseits eine Annahme in Form einer Mitteilung, deren Empfang durch das Verfahren ermöglicht wird. Somit ist stets bekannt, ob und welche mobile Wartungs- und Reparatureinheit einen Auftrag durchführt. Dies ist vorteilhaft, da es das Verfahren in die Lage versetzt, diese Information für das oben beschrieben Auswahlverfahren zu verwenden.

In einem weiteren Ausführungsbeispiel betrifft die vorliegende Erfindung ein Wartungs- und / oder Reparatursystem für zumindest ein Fahrrad von einer Vielzahl von im Feld verteilten Fahrrädern mit ersten Identifizierungsdaten, wobei das Wartung- und / oder Reparatursystem die folgenden Mittel umfasst:
a. Empfangsmittel, eingerichtet zum Empfangen einer Wartungs- und / oder Reparaturanfrage über ein Netzwerk, wobei die Anfrage die ersten Identifizierungsdaten des Fahrrads umfasst;
b. Versendemittel, eingerichtet zum Versenden eines Wartungs- und / oder Reparaturauftrags an eine mobile Wartungs- und Reparatureinheit mit einer Angabe eines Orts, an dem das Fahrrad zur Wartung und / oder Reparatur bereitsteht.
c. Empfangsmittel, eingerichtet zum Empfangen einer Bestätigung, dass die mobile Wartungs- und Reparatureinheit an dem Ort eingetroffen ist.

Bevorzugt ist das Wartungs- und / oder Reparatursystem ausgebildet, eines der oben beschriebenen Verfahren durchzuführen.

Ferner betrifft die vorliegende Erfindung auch ein Verfahren zum Betrieb einer mobilen Wartungs- und Reparatureinheit für zumindest ein Fahrrad von einer Vielzahl von im Feld verteilten Fahrrädern, wobei das Verfahren die folgenden Schritte umfasst:
a. Empfangen eines Wartungs- und / oder Reparaturauftrags von einem der oben beschriebenen Wartungs- und / oder Reparatursysteme;
b. Maschinelles Lesen eines Identifizierungselements am Fahrrad mit einem Lesegerät zum Erhalt von zweiten Identifizierungsdaten des Fahrrads; und
c. Versenden von zweiten Identifizierungsdaten des Fahrrads an das Wartungs- und / oder Reparatursystem.

Bei Übermittlung eines Wartungs- und / oder Reparaturauftrages durch einen Nutzer wird besagter Auftrag an eine Wartungs- und Reparatureinheit weitergeleitet. Das Verfahren zum Betrieb einer mobilen Wartungs- und Reparatureinheit ermöglicht den Empfang des Auftrags bevorzugt mittels eines Netzwerks, z. B. durch ein Mobilfunknetzwerk. Dadurch kann sich die mobile Wartungs- und Reparatureinheit an einem beliebigen Ort aufhalten und ist trotzdem in der Lage, schnell und zuverlässig einen oder mehrere Wartungs- und / oder Reparaturaufträge zu empfangen. Dadurch ist eine Rückkehr zu einem bestimmten Standort nicht nötig, um neue Aufträge zu erhalten. Vorteilhaft hierbei wiederum ist, dass zu wartende und / oder zu reparierende Fahrräder schnell und ohne unnötige Verzögerung aufgesucht, repariert und / oder gewartet werden können. Hierdurch wird die Mobilität besagter Fahrräder signifikant verbessert und diese stehen somit wieder schnell und zuverlässig für Dienst- oder Privatfahrten des Nutzers zur Verfügung. Die durch die Wartungs- und Reparatureinheit wartbaren Fahrräder verfügen bevorzugt über Identifizierungsdaten, wie zum Beispiel einen QR-Code oder Ähnliches. Das Verfahren zum Betrieb einer mobilen Wartungs- und Reparatureinheit ermöglicht den Einsatz eines Scanners, der beispielsweise sensor-basiert diesen Code ablesen kann. Dadurch dient der Code als besagte zweite Identifizierungsdaten. Diese zweiten Identifizierungsdaten können nach Ablesen an das Wartungs- und / oder Reparatursystem übertragen werden.

Bevorzugt ist das Verfahren zum Betrieb einer mobilen Wartungs- und Reparatureinheit dazu eingerichtet, dass der im Schritt a empfangene Wartungs- und / oder Reparaturauftrag eine Identifizierung des Fahrrads nicht ermöglicht.

Vorzugsweise erst im Zusammenspiel mit dem vorab beschriebenen Ablesen und Versenden der zweiten Identifizierungsdaten wird eine Identifikation des zu wartenden und / oder zu reparierenden Fahrrads ermöglicht. Somit ist eine Verwechslung des zu wartenden und / oder zu reparierenden Fahrrads mit einem anderen Fahrrad ausgeschlossen. Vorteilhaft hierbei ist, dass durch Vermeidung einer Verwechslung ein Einbau oder Austausch von unpassenden oder ungewünschten Teilen vermieden wird. Dadurch wird eine signifikante Verringerung von Fehleinbauten erzielt was wiederrum zu einem einwandfreien technischen Betrieb der zu wartenden und / oder zu reparierenden Fahrrädern führt. Erneut wird die Verkehrssicherheit der Fahrräder verbessert und die potentielle Unfallgefahr, verursacht durch den Einbau falscher oder unpassender Teile, verringert.

In einem weiteren Ausführungsbeispiel der vorliegenden Erfindung umfasst das Verfahren ferner den Schritt des Erhaltens einer Teileliste des identifizierten Fahrrads in Erwiderung auf den Versand der zweiten Identifizierung. Vorzugsweise umfasst die Teileliste Teile-Identifikationsnummern. Vorzugsweise weist das Verfahren ferner den Schritt des Versendens einer Mitteilung über zumindest eines bei der Wartung und / oder Reparatur verwendeten Fahrradteils auf. Bevorzugt weist die Mitteilung eine Teile-Identifikationsnummer des zumindest einen bei der Wartung und / oder Reparatur verwendeten Fahrradteils auf.

Da erst nach Versenden der zweiten Identifizierungsdaten die Teileliste des zu wartenden und / oder zu reparierenden Fahrrads von der mobilen Wartungs- und Reparatureinheit empfangen bzw. einsehbar wird, entsteht ein weiterer Kontrollmechanismus welcher sicherstellt, dass die zu dem Wartungs- und / oder Reparaturauftrag passende Teileliste übermittelt bzw. einsehbar wird. Wichtig hierbei ist, dass die Teileliste schon vorab an die mobile Wartungs- und Reparatureinheit übermittelt worden sein kann, diese aber erst nach Übermittlung der zweiten Identifizierungsdaten einsehbar wird. Dabei werden die einzelnen Teile anhand einer Teile-Identifikationsnummer eindeutig identifiziert. Die Verwechslungsgefahr sowohl von zu wartenden und / oder zu reparierenden Fahrrädern als auch von Ersatzteilen wird dadurch merklich vermindert. Dadurch wird stets für den korrekten Einsatz passender Ersatzteilen gesorgt.

Vorteilhaft ist auch die Übermittlung eines oder mehrerer bei einer Wartung- und / oder Reparatur verwendeter Teile an das oben beschriebene Wartungs- und / oder Reparatursystem. Besagtes System ist dadurch vorzugsweise ständig über den aktuellen Teilebestand der mobilen Wartungs- und Reparatureinheiten in Kenntnis und kann diese Information zur Disposition weiterer Wartungs- und / oder Reparaturaufträge heranziehen. Durch Verwendung von Teile-Identifikationsnummern sind alle Teile voneinander unterscheidbar, auch bei großer optischer Ähnlichkeit, was sich vorteilhaft auf die korrekte Auswahl von passenden Teilen auswirkt.

Eine weitere bevorzugte Ausführungsform des Verfahrens weist den Schritt des Versendens einer Annahme des Wartungs- und / oder Reparaturauftrags an das Wartungs- und / oder Reparatursystem auf. Dabei umfassen die Schritte des Erhaltens und Versendens bevorzugt die Verwendung eines Mobilfunknetzwerks.

Das Verfahren zum Betrieb einer mobilen Wartungs- und Reparatureinheit ist in der Lage, das Wartungs- und / oder Reparatursystem darüber in Kenntnis zu setzen, dass eine mobile Wartungs- und Reparatureinheit einen Wartungs- und / oder Reparaturauftrag annimmt. Durch diese Information weiß das Wartungs- und / oder Reparatursystem immer über die augenblickliche Auslastung aller Wartungs- und Reparatureinheiten Bescheid und kann aufgrund dessen die Auftragsdisposition optimieren und effizienter gestalten. Durch Verwendung eines Mobilfunknetzwerks kann die Nachricht ortsungebunden an das Wartungs- und / oder Reparatursystem übermittelt werden. Dadurch erreicht die Information besagtes System stets zeitnah was die Optimierung der Auftragsdisposition weiter verbessert.

Ein weiteres Ausführungsbeispiel des erfindungsgemäßen Verfahrens ist darauf gerichtet, dass zumindest ein Fahrradteil, das von der mobilen Wartungs- und Reparatureinheit verwendet wird, durch maschinelles Ablesen von Teile-Identifikationsdaten identifiziert wird. Bevorzugt wird dabei die abgelesene Teile-Identifikationsnummer mit sich in der Teileliste befindlichen Teile-Identifikationsnummern verglichen. Dabei wird bevorzugt bei einer Feststellung, dass die maschinell abgelesene Teile-Identifikationsnummer mit keiner der in der Teileliste gespeicherten Teile-Identifikationsnummern übereinstimmt, eine Benachrichtigung ausgegeben.

Das maschinelle Ablesen einer Teile-Identifikationsnummer, welche zum Beispiel in Form eines QR-Codes oder Barcodes realisiert ist, erlaubt ein automatisches Ausbuchen des Ersatzteils aus dem Teilebestand der mobilen Wartungs- und Reparatureinheit. Weiterhin ermöglichen das maschinelle Ablesen und der Vergleich der abgelesenen Teile-Identifikationsnummer die Implementierung eines weiteren Kontrollmechanismus. Wird versehentlich ein falsches oder unpassendes Teil zur Wartung und / oder Reparatur eines Fahrrads aus dem Teilebestand einer mobilen Wartungs- und Reparatureinheit entnommen, so wird dies durch eine Benachrichtigung, z .B. in Form eines akustischen oder visuellen Signals, signalisiert. Durch die Signalisierung wird ein versehentlicher Einbau des falschen oder unpassenden Ersatzteils vermieden. Dies führt zu einer merklichen Reduktion der Fehlerquote hinsichtlich falsch oder unpassend verbauter Ersatzteile, was wiederum zu einer erhöhten Verkehrssicherheit der zu wartenden und / oder zu reparierenden Fahrräder führt.

Vorzugsweise betrifft die vorliegende Erfindung auch eine mobile Wartungs- und Reparatureinheit zur Wartung- und / oder Reparatur von zumindest einem Fahrrad von einer Vielzahl von im Feld verteilten Fahrrädern, welche die folgenden Mittel umfasst:
a. Empfangsmittel, eingerichtet zum Empfangen eines Wartungs- und / oder Reparaturauftrags von einem Wartungs- und / oder Reparatursystem wie oben beschrieben;
b. ein Lesegerät, eingerichtet zum Lesen eines Identifizierungselements am Fahrrad zum Erhalt von zweiten Identifizierungsdaten des Fahrrads; und
c. Versendemittel, eingerichtet zum Versenden von zweiten Identifizierungsdaten des Fahrrad an das oben beschriebene Wartungs- und / oder Reparatursystem.

Bevorzugt ist die mobile Wartungs- und Reparatureinheit ausgebildet, eines der vorab beschriebenen Verfahren zum Betrieb einer mobilen Wartungs- und Reparatureinheit durchzuführen.

Ferner betrifft die vorliegende Erfindung in einem Ausführungsbeispiel ein Fahrrad zur Verwendung mit dem oben erläuterten Wartungs- und / oder Reparatursystem, aufweisend zweite Identifizierungsdaten, die maschinell mit einem Lesegerät lesbar sind. Vorzugsweise sind die zweiten Identifizierungsdaten als einer oder mehrerer der vorliegenden Codes am oder im Fahrrad bereitgestellt:
i. ein Code in einem RFID-Chip;
ii. ein Barcode;
iii. ein QR-Code;

Beispielsweise ist am Rahmen des Fahrrads ein QR-Code, ein Barcode, oder im Rahmen ein RFID-Chip oder Ähnliches angebracht, der ein maschinelles Ablesen der zweiten Identifizierungsdaten einfach ermöglicht. Ein weiter Vorteil eines z. B. am oder im Rahmen angebrachten Codes ist es, dass weitere Fahrräder, die an dem in dieser Anmeldung beschrieben Verfahren teilnehmen möchten, durch einfaches Anbringen des besagten Codes integriert werden können. Ein maschinelles Ablesen des Codes ist im Vergleich zu einem manuellen Ablesen weiterhin weniger fehleranfällig. Hierdurch wird insbesondere die korrekte Zuweisung eines Wartungs- und / oder Reparaturauftrags zum gewünschten Fahrrad sichergestellt.

In einer weiteren bevorzugten Ausführungsform weist das Fahrrad ferner erste Identifizierungsdaten, die ohne ein Lesegerät lesbar am Fahrrad angebracht sind, auf.

Die Verwendung von ersten, menschlich lesbaren Identifizierungsdaten bietet zwei weitere Vorteile. Zum einen können die ersten Identifizierungsdaten von einem Nutzer zur Übermittlung eines Wartungs- und / oder Reparaturauftrags an das Wartungs- und / oder Reparatur-system genutzt werden. Durch Eingabe der Daten kann somit leicht ein Auftrag erstellt werden. Da diese ersten Identifizierungsdaten am Fahrrad selbst angebracht sind, können diese von einem Nutzer nicht zu Hause oder im Büro vergessen werden. Dadurch ist der Nutzer stets in der Lage, einen besagten Auftrag zu übermitteln. Zum anderen liegt ein weiterer Vorteil darin, dass eine mobile Wartungs- und Reparatureinheit die z.B. bei Verschmutzung oder Verlust der zweiten Identifizierungs-daten, das zu wartende und / oder zu reparierende Fahrrad trotzdem noch identifizieren kann. Beispielsweise kann die Identifizierung durch telefonischen Abgleich der ersten Identifizierungsdaten mit denen im Wartungs- und / oder Reparatursystem hinterlegten Daten durchgeführt werden.

Eine weitere bevorzugte Ausführungsform der vorliegenden Erfindung betrifft ein Computerprogramm mit Instruktionen zur Durchführung der hier beschriebenen Verfahren.

Schließlich betrifft die vorliegende Erfindung in einem Ausführungsbeispiel ein verteiltes Fahrrad-Instandhaltungssystem, umfassend ein Wartungs- und / oder Reparatursystem wie oben beschrieben, eine Wartungs- und Reparatureinheit wie oben beschriebenen in Verbindung mit einem Fahrrad wie oben beschrieben.

### 4. Beschreibung der Zeichnungen

Im Folgenden werden bevorzugte Ausführungsbeispiele der vorliegenden Erfindung unter Bezugnahme auf die begleitenden Figuren erläutert:
- Fig. 1:: Schematische Darstellung eines Wartungs- und / oder Reparatursystems, einer mobilen Wartungs- und Reparatureinheit und eines Fahrrads gemäß einer Ausführungsform der Erfindung;
- Fig. 2:: Schematische Darstellung eines Identifizierungselements gemäß einer Ausführungsform der Erfindung;
- Fig. 3:: Schematische Darstellung der Erstellung eines Reparatur- und / oder Wartungsauftrages in einer Ausführungsform der Erfindung; und
- Fig. 4:: Schematische Darstellung der Abwicklung eines Reparatur- und / oder Wartungsauftrages gemäß einer Ausführungsform der Erfindung.

### 5. Beschreibung bevorzugter Ausführungsformen

Nachfolgend werden Aspekte der vorliegenden Erfindung im Kontext einer bevorzugten Ausführungsform beschrieben.

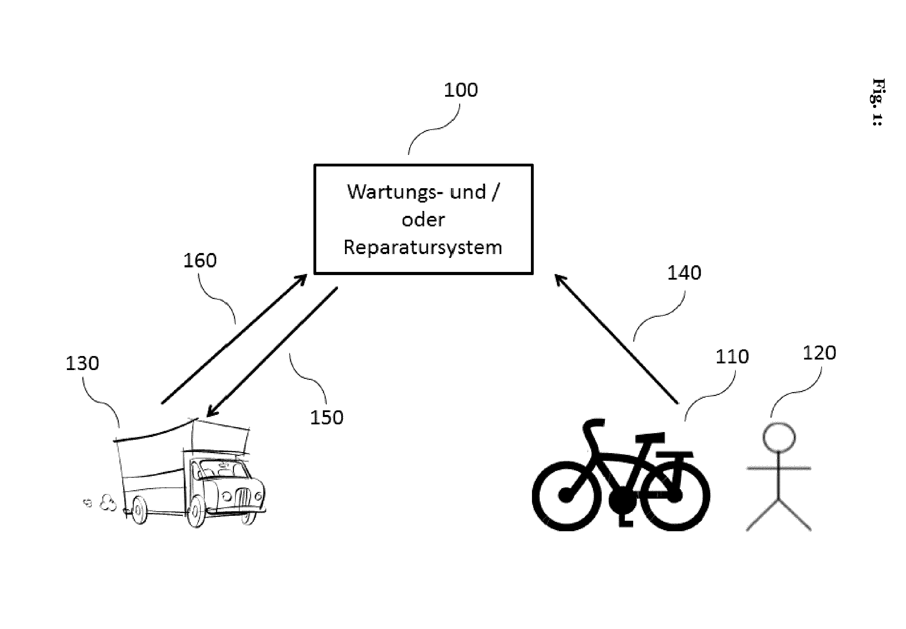

Fig. 1 zeigt ein Wartungs- und / oder Reparatursystem 100, welches zum Empfangen 140 einer durch einen Nutzer 120 übermittelten Wartungs- und / oder Reparaturanfrage für ein Fahrrad 110 eingerichtet ist. Im Folgenden werden unter dem Begriff Fahrrad alle durch Muskelkraft betriebenen Fortbewegungsmittel, auch inklusive elektrischem Unterstützungsmotor, verstanden. Allerdings ist auch eine Anwendung der Erfindung auf andere Fortbewegungsmittel, wie beispielsweise Segways etc. möglich.

Der Empfang 140 eines Wartungs- und / oder Reparaturauftrags kann beispielsweise durch eine Internetseite, die bevorzugt auf einer Datenbank basiert, realisiert werden. Denkbar sind aber auch andere Formen der Übermittlung der Anfrage. Denkbar ist zum Beispiel auch ein Telefonanruf oder eine Übermittlung mittels Fax, E-Mail oder Ähnlichem. Bevorzugt verwendet der Nutzer 120 zur Übermittlung eine sog. Smartphone-App, die speziell für das vorliegende System konzipiert ist. Insbesondere steht hier die einfache Bedienung des Systems aus Sicht des Nutzers 120 im Vordergrund.

Der Nutzer 120 eines Fahrrads 110 wird besagte Wartungs- und / oder Reparaturanfrage in der Regel dann übermitteln, sobald das Fahrrad 110 gewartet und / oder repariert werden soll. Eine Wartung kann zum Beispiel das Tauschen eines abgefahrenen Reifens oder das Ölen der Fahrradkette sein. Eine Reparatur hingegen ist normalerweise auf die Beseitigung eines Defekts ausgerichtet. Dies kann beispielsweise das Tauschen eines defekten Ritzels der Gangschaltung oder das Montieren eines verlorengegangen Teils beinhalten. Denkbar ist aber auch der Einbau gänzlich neuer Teile, die vorher nicht an dem Fahrrad 110 verbaut waren.

Das Wartungs- und / oder Reparatursystem 100 ist so konzipiert, dass es eine Vielzahl von Reparatur- und / oder Wartungsanfragen von einer Vielzahl von Nutzern 120 empfangen kann. Weiterhin hat das System 100 Zugriff auf eine Vielzahl von Wartungs- und Reparatureinheiten 130.

Eine Wartungs- und Reparatureinheit 130 ist z. B. ein Lieferwagen oder Ähnliches, der ein Teilelager mit Ersatzteilen und weiteren Fahrradteilen beinhaltet. Zusätzlich verfügt die mobile Wartungs- und Reparatureinheit 130 über ein GPS-Modul (oder über vergleichbare Module) und übermittelt von Zeit zu Zeit ihren aktuellen Standort, z.B. durch Nutzung einer Mobilfunkverbindung oder Ähnlichem, an das Wartungs- und / oder Reparatursystem 100. Weiterhin verfügt die mobile Wartungs- und Reparatureinheit 130 über einen Scanner, der es erlaubt, aus dem integrierten Teilelager entnommene Ersatzteile zu scannen. Dadurch wird das Teil aus dem lokalen Teilebestand einer mobilen Wartungsund Reparatureinheit 130 ausgebucht. Der Teilebestand einer Einheit 130 wird stets an das Wartungs- und / oder Reparatursystem 100 übermittelt. Auch dies geschieht bevorzugt mittels einer Mobilfunkverbindung. Derselbe Scanner kann auch zur Einbuchung von Ersatzteilen verwendet werden wenn diese in eine mobile Wartungs- und Reparatureinheit 130 eingeladen werden. Zusätzlich kann die mobile Wartungs- und Reparatureinheit 130 über ein mobiles Kartenbezahl-system verfügen damit Nutzer durchgeführte Wartungen, Reparaturen und dafür verwendete Ersatzteile direkt per EC-Karte oder Kreditkarte bezahlen können. Denkbar sind auch alle anderen mobilen Bezahlsysteme. Optional kann eine mobile Wartungs- und Reparatureinheit 130 ferner über einen Drucker zum Drucken von Rechnungen und / oder Lieferscheinen verfügen. Denkbar ist schließlich auch der Einsatz eines Geräts mit drucksensitiver Fläche, um das Unterschreiben eines Lieferscheins oder Ähnlichem zu ermöglichen.

In einem Ausführungsbeispiel kann die Wartungs- und Reparatureinheit 130 auch ganze Ersatzfahrräder mit sich führen. Falls eine von einem Nutzer 120 angefragte Wartung- und / oder Reparatur nicht durchgeführt werden kann, ermöglicht dies das Bereitstellens eines Ersatzfahrrads. Gründe für eine nicht durchführbare Wartung- und / oder Reparatur ist beispielsweise ein Totalschaden. Zusätzlich weist eine Wartungs- und Reparatureinheit 130 eine integrierte Werkstatt auf. Diese beinhaltet alle nötigen Werkzeuge um ortsungebunden, zum Beispiel am Straßenrand oder auf einem Parkplatz, alle erdenklichen Wartungs- und / oder Reparaturarbeiten durchführen zu können. Üblicherweise wird eine solche Wartungs- und Reparatureinheit 130 von einem Fahrradmechaniker betrieben. Dadurch ist die mobile Wartungs- und Reparatureinheit 130 im Stande, Wartungs- und / oder Reparaturarbeiten ordnungsgemäß durchzuführen.

Wurde von einem Nutzer 120 eine Anfrage zur Wartung und / oder Reparatur eines Fahrrads 110 an das System 100 übermittelt, so wird diese zur Erzeugung eines Wartungs- und / oder Reparaturauftrags in dem Wartungs- und / oder Reparatursystem 100 gespeichert. Im Anschluss findet eine Übermittlung 150 des besagten Auftrags an eine von einer Vielzahl von Wartungs- und Reparatureinheiten 130 statt. Der Auftrag enthält bevorzugt den Ort, an dem die Wartung und / oder Reparatur durchgeführt werden soll. Weiterhin können von einem Nutzer 120 angegebene Mangelbeschreibungen oder gewünschte Wartungsarbeiten in dem Auftrag vermerkt sein. Auch die Uhrzeit, zu der die Wartung und / oder Reparatur durchgeführt werden soll kann in dem Auftrag hinterlegt sein. Wenn die Wartungs- und oder Reparatureinheit 130 den Auftrag annehmen will, so initiiert sie eine Übermittlung 160 einer entsprechenden Bestätigung an das Wartungs- und / oder Reparatursystem 100. Dadurch ist das System 100 in Kenntnis, ob der Auftrag von der Einheit 130 durchgeführt wird oder nicht.

Denkbar ist der Betrieb der vorliegenden Erfindung in einem Franchise-Modell. Hierbei vergibt ein Betreiber eines erfindungsgemäßen Wartungs- und / oder Reparatursystems 100 mobile Wartungs- und Reparatureinheiten 130 an Fahrradmechaniker. Diese Betreiben die Einheiten 130 selbstständig. Der Betreiber oder ein Dritter betreibt zusätzlich ein zentrales Teilelager, an dem die mobilen Wartungs- und Reparatureinheiten 130 mit Ersatzteilen für Fahrräder 110 beladen werden können.

Vorteilhaft hierbei ist, dass ein Fahrradmechaniker von allen kaufmännischen Tätigkeiten, wie z. B. der Buchführung, dem Erstellen von Rechnungen und Mahnungen, der aufwändigen Kalkulation für Verkaufspreise, der Teilebeschaffung usw. entbunden wird. Dieser kann sich somit vordergründig auf seine Tätigkeit als Mechaniker konzentrieren.

Denkbar sind weiterhin unterschiedliche Ausprägungen des oben genannten Franchise-Modells. Beispielsweise kann einem selbständigen Betreiber einer mobilen Wartungs- und Reparatureinheit 130 ein Teilebezugszwang auferlegt werden. Dadurch ist dieser verpflichtet, Ersatzteile ausschließlich vom Betreiber des Wartungs- und / oder Reparatursystems 100 oder von einem vorab bestimmten Dritten zu beziehen.

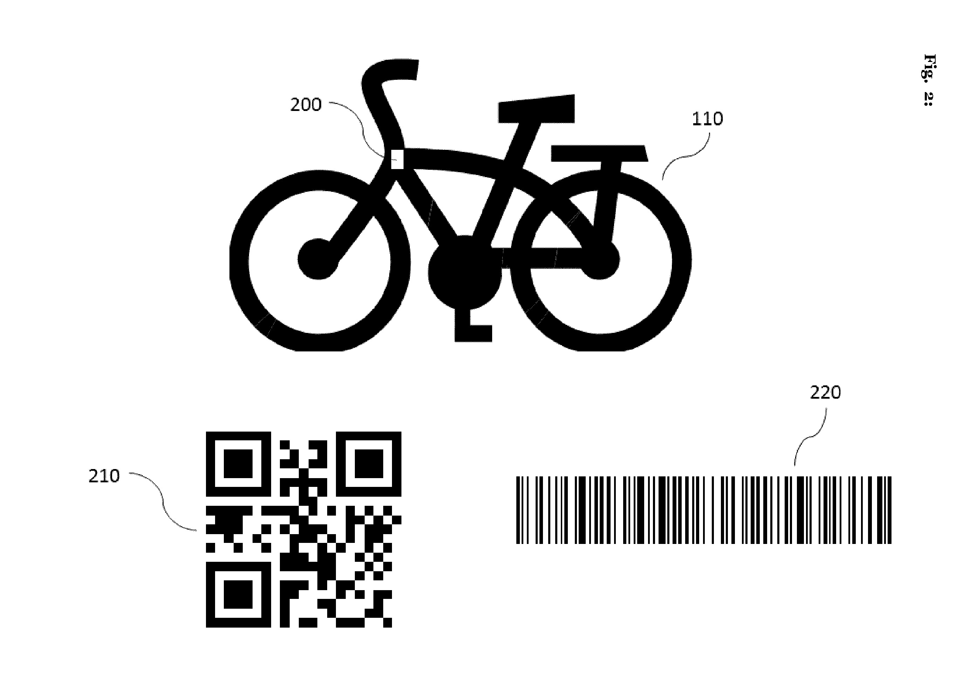

Fig. 2 zeigt ein Fahrrad 110, an dem an einer Stelle 200 ein Code 210, 220 angebracht ist. Der Code 210, 220 kann beispielsweise ein QR-Code 210, ein RFID-Chip oder ein Barcode 220 sein. Denkbar ist aber auch die Verwendung aller anderen Arten an Codes. Wichtig hierbei ist, dass der Code 210, 220 maschinell durch ein Ablesegerät abgelesen werden kann. QR-Codes 210 sind besonders geeignet, da sie auch bei leichter Verschmutzung noch zuverlässig maschinell abgelesen werden können.

Das Ablesen wird üblicherweise sensor-basiert durchgeführt. Die Stelle 200 kann dabei jede Stelle auf dem Rahmen oder auf einem anderen Teil des Fahrrads 110 sein. Der Code 210, 220 kann beispielsweise einfach auf den Rahmen geklebt werden. Denkbar ist aber auch ein Einstanzen des Codes 210, 220 in den Rahmen.

Das Fahrrad 110 verfügt weiterhin über eine Rahmennummer. Diese ist ebenfalls im oder am Rahmen des Fahrrads 110 angebracht. Vorzugsweise ist diese eingestanzt, damit sie nicht entfernt werden kann.

Sowohl der Code 210, 220 als auch die Rahmennummer erlauben die Identifizierung des Fahrrads 110. Einerseits wird dies genutzt, um ein zu wartendes und / oder zu reparierendes Fahrrad 110 zu identifizieren, anderseits kann dadurch auch die Identifizierbarkeit eines gestohlenen Fahrrads 110 erleichtert werden.

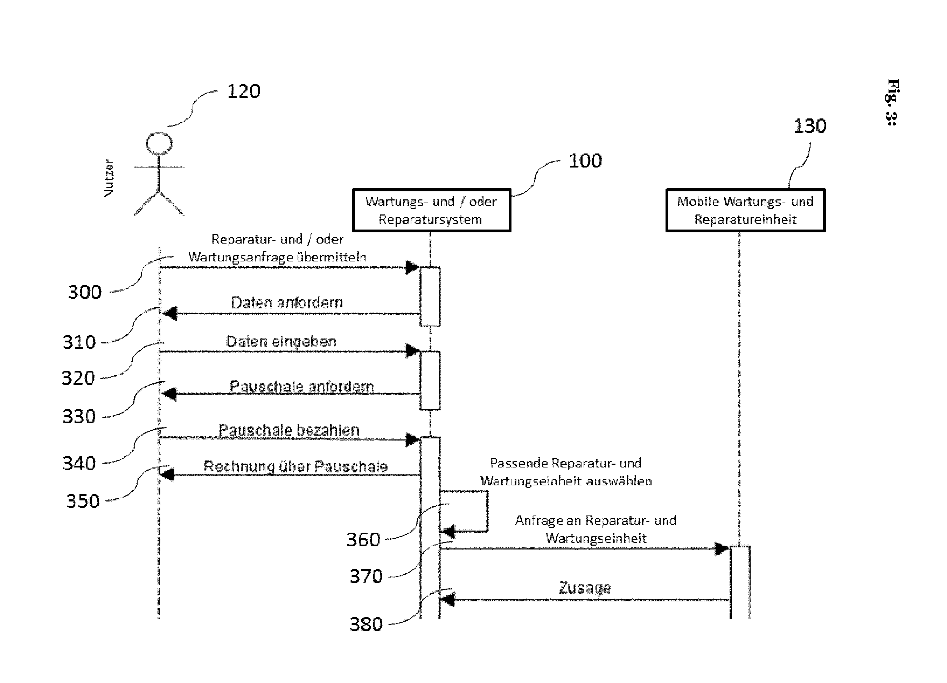

Fig. 3 zeigt beispielhaft wie ein Nutzer 120 eine Reparatur- und / oder Wartungsanfrage an das Wartungs- und / oder Reparatursystem 100 übermittelt. Zusätzlich wird gezeigt wie das Wartungs- und / oder Reparatursystem 100 eine Anfrage zur Abwicklung eines zugehörigen Wartungs- und / oder Reparaturauftrag an eine mobile Wartungs- und Reparatureinheit 130 richtet und dieser von besagter Einheit 130 zugesagt wird.

Die Übermittlung einer Wartungs- und / oder Reparaturanfrage 300 durch einen Nutzer 120 für ein Fahrrad 110 an das Wartungs- und / oder Reparatursystem 100 läuft wie folgt ab:
Der Nutzer 120 öffnet eine Internetseite, auf der er unter anderem eine Preisübersicht für Wartungs- und / oder Reparaturaufträge findet. Der Preisübersicht folgt ein Login. Als Login-Daten kann der Nutzer 120 die auf dem Fahrrad 110 angebrachte Rahmennummer verwenden. Die Verwendung eines Passworts ist nicht erforderlich, aber möglich. Dies gestaltet den Vorgang des "Einloggens" besonders einfach. Durch den Login-Vorgang ist die Wartungs- und / oder Reparaturanfrage bereits mit der Rahmennummer des Fahrrads 110 verknüpft. Der Aufwand für einen Nutzer 120 wird durch diese simple Art der Auftragsübermittlung deutlich reduziert. Beispielsweise muss er sich kein weiteres Passwort merken etc. Durch die Nutzung eines Online-Verfahrens wird weiterhin auch ein unerwünschtes Warten des Nutzers 120 in Telefonwarteschleifen vermieden, was zu einem erhöhten Komfort des gesamten Verfahrens führt.

Der Nutzer 120 wird nun von dem Wartungs- und / oder Reparatursystem 100 zur Eingabe diverser Daten aufgefordert 310. Darauffolgend gibt der Nutzer 100 die angefragten Daten ein 320. Im Zuge dessen gibt der Nutzer 120 nun eine Adresse oder einen Ort an, an welchem die Wartung und / oder Reparatur des Fahrrads 110 stattfinden soll. In der Regel ist die Adresse seine Wohn- oder Geschäftsanschrift oder alternativ sein Standort an dem ihm z. B. ein Schaden an seinem Fahrrad 110 entstanden ist. Optional kann auch noch eine abweichende Rechnungsadresse durch den Benutzer 120 angegeben werden. Weiterhin gibt der Nutzer 120 eine E-Mail-Adresse zum Erhalt einer Bestätigung des Anfrageeingangs und für die Zustellung einer elektronischen Rechnung über eine fällige Anfahrtspauschale und die spätere Wartung und / oder Reparatur ein. Außerdem gibt der Nutzer 120 ein Wunschdatum und eine optionale Wunschuhrzeit für die Durchführung der Wartung und / oder Reparatur ein, sowie optional eine Mobiltelefonnummer damit die mobile Wartungs- und Reparatureinheit 130 bei schwer zugänglichen Adressen oder Orten (beispielsweise unleserlichen Klingelschildern) Kontakt aufnehmen kann. Denkbar ist auch eine Kontaktaufnahme, z. B. durch einen Mitarbeiter des Betreibers des Wartungs- und / oder Reparatursystems 100 um einen anderen Termin zur Wartung und / oder Reparatur des Fahrrads 110 zu vereinbaren.

Weiter kann der Nutzer 120 mitteilen, ob es sich nach seiner Sicht um einen Gewährleistungsfall (Voraussetzung: Erstkäufer, Zweijahresfrist, anfänglicher Mangel) handelt. Optional ist auch die Angabe der Beschreibung der erforderlichen Wartungs- und / oder Reparaturmaßnahmen (Beispiel: Gangschaltung defekt). Optional ist dies deshalb, weil der Nutzer 120 nicht immer den Sachverstand zur richtigen Mangelbeschreibung hat.

Das Wartungs- und / oder Reparatursystem 100 erlaubt auch ein automatisiertes Feststellen, ob es sich bei einer Wartung und / oder Reparatur um ein Gewährleistungsfall handelt. Da vorzugsweise alle Fahrräder 110 bzw. die zugehörigen Identifizierungsdaten sowie das Kaufdatum zentral in einer Datenbank des Systems gespeichert sind, kann ohne weiteres festgestellt werden, ob z.B. bestimmte Teile noch über eine Gewährleistungspflicht seitens des Verkäufers, welcher der Systembetreiber oder ein Dritter sein kann, verfügen.

Weiterhin kreuzt der Nutzer 120 ein Feld "Auftragsbedingungen" an und bestätigt dadurch die Auftrags-bedingungen. Diese beinhalten beispielsweise den Ausschluss der Reparatur bei Irreparabilität trotz Bezahlung der Anfahrt usw. Ob es sich bei dem Nutzer 120 um den Erstkäufer oder den Eigentümer handelt spielt für die Übermittlung der Wartungs- und / oder Reparaturanfrage keine Rolle.

Nach Beendigung des Vorgangs 320 wird der Nutzer 120 zur Zahlung einer Pauschalen aufgefordert 330. Die Pauschale dient als Anzahlung und kann durch eine Online-Bezahlfunktion 340 bezahlt werden. Im erläuterten Ausführungsbeispiel ist es eine Voraussetzung für die Anfahrt einer mobilen Wartungs- und Reparatureinheit 130, dass besagte Pauschale bezahlt wurde. War die Zahlung erfolgreich, erhält der Nutzer 120 eine automatisierte Bestätigungs-E-Mail mit einer Rechnung über die Pauschale 350 und die Wartungs- und / oder Reparaturanfrage wird automatisch durch das Wartungs- und / oder Reparatursystem 100 in einen Wartungs- und / oder Reparaturauftrag umgewandelt.

Erst im Anschluss daran wird durch das Wartungs- und / oder Reparatur-system 100 eine passende Wartungs- und Reparatureinheit 130 ausgewählt. Die Auswahl 360 findet vorzugsweise prioritätengesteuert statt. Die höchste Priorität hat dabei die Berücksichtigung, ob eine mobile Wartungs- und Reparatureinheit 130 alle zur Wartung und / oder Reparatur erforderlichen Teile mit sich führt, bzw. diese sich in ihrem integrierten Lager befinden. Dies ist möglich, da das Wartungs- und / oder Reparatursystem 100 alle Teile eines Fahrrads 110 oder Fahrrad-typs gespeichert hat. Die relevanten Ersatzteile können also durch die bei der Auftragsanfrage übermittelte Rahmennummer des zu wartenden und / oder zu reparierenden Fahrrads 110 bestimmt werden. Verfügen mehrere mobile Wartungs- und Reparatureinheiten 130 über einen passenden Ersatzteilbestand, so wird weiter berücksichtigt, an welchem Ort sich eine mobile Wartungs- und Reparatureinheit 130 derzeit befindet. Priorisiert wird hierbei die dem durch den Nutzer 120 gewünschten Wartungs- und / oder Reparaturort am nächsten befindliche mobile Wartungs- und Reparatureinheit 130. Kommen nun immer noch mehrere mobile Wartungs- und Reparatureinheiten 130 in Frage, weil diese sich zum Beispiel gleich nah am gewünschten Ort befinden, so wird in den Auswahlprozess zusätzlich die durch den Nutzer 120 gewünschte Uhrzeit, zu der die Wartung- und / oder Reparatur durchgeführt werden soll, miteinbezogen. Falls beispielsweise eine mobile Wartungs- und Reparatureinheit 130 mit der Durchführung einer Wartung und / oder Reparatur beschäftigt ist und die gewünschte Uhrzeit, trotz ihrer Nähe zum gewünschten Ort, nicht einhalten kann, so wird der Wartungs- und / oder Reparaturauftrag an eine andere mobile Wartungs- und Reparatureinheit 130 gegeben. Im Vordergrund der Priorisierung steht vor allem, den Nutzer 120 zufrieden zu stellen. Daher ist eine andere Gewichtung der Priorisierung oder das Einführen weiterer, nutzerorientierter Kriterien denkbar. Denkbar ist aber auch eine telefonische Abstimmung von Wartungs- und / oder Reparaturterminen mit den Nutzern 120 und den mobilen Wartungs- und Reparatureinheiten 130. Dies kann z.B. dann vorteilhaft sein, wenn alle mobile Wartungs- und Reparatureinheiten 130 einen Wartungs- und / oder Reparaturauftrag abgelehnt haben.

Neben der prioritätenbasierten Bestimmung einer passenden mobilen Wartungs- und Reparatureinheit 130 ist das Wartungs- und / oder Reparatursystem 100 in der Lage, Routenprognosen, ebenfalls unter Berücksichtigung der oben genannten Prioritäten, zu erstellen. Durch die Routenprognosen wird es ermöglicht, eine Vielzahl von Wartungs- und / oder Reparaturaufträgen so an die einzelnen mobilen Wartungs- und Reparatureinheiten 130 zu übermitteln, dass diese möglichst gut ausgelastet sind und dabei trotzdem alle Wünsche der Nutzer 120 hinsichtlich Ort und Uhrzeit berücksichtigt werden können. Möglich ist auch die Berücksichtigung von Wahrscheinlichkeiten zur Bestimmung der Routenprognosen, inwiefern z.B. Wartungs- und / oder Reparaturanfragen zu bestimmten Zeiten (z.B. im Berufsverkehr) oder an bestimmten Orten (z.B. an Hauptverkehrswegen) entstehen können. Diese Wahrscheinlichkeiten können z. B. durch Analyse von Daten vergangener Zeiträume bestimmt und ständig aktualisiert werden. Denkbar ist hier z.B. der Einsatz von sog. Data-Mining-Verfahren. Die Miteinbeziehung von Wahrscheinlichkeiten ermöglicht es dem Wartungs- und / oder Reparatursystem 100 schon vor Eingang einer Wartungs- und / oder Reparaturanfrage mobile Wartungs- und Reparatureinheiten 130 zu bestimmten Zeiten an bestimmten Orten zu platzieren. Hierdurch wird abermals dafür Sorge getragen, dass Fahrräder 110 schnellstmöglich gewartet und / oder repariert werden können.

Im Falle einer Überlastung, d.h. es liegen so viele Wartungs- und / oder Reparaturanfragen vor, dass diese nicht mehr von den verfügbaren mobilen Wartungs- und Reparatureinheiten 130 abgearbeitet werden könnten, kann ein Mitarbeiter des Betreibers des Systems 100 oder auch ein automatisierter Softwareagent Kontakt zu den Nutzern 120 aufnehmen und neue Uhrzeiten bzw. ein neues Datum für die Wartung und / oder Reparatur vereinbaren.

Nach Auswahl einer für den Wartungs- und / oder Reparaturauftrag passenden mobilen Wartungs- und Reparatureinheit 130 wird dieser nun eine Anfrage übermittelt 370. Diese Anfrage zur Durchführung eines Wartungs- und / oder Reparaturauftrags kann von der mobilen Wartungs- und Reparatureinheit 130 abgelehnt oder zugesagt 380 werden. Wird der Auftrag abgelehnt oder nicht angenommen, so wird von dem Wartungs- und / oder Reparatursystem 100 eine andere Einheit 130 für den Auftrag vorgesehen.

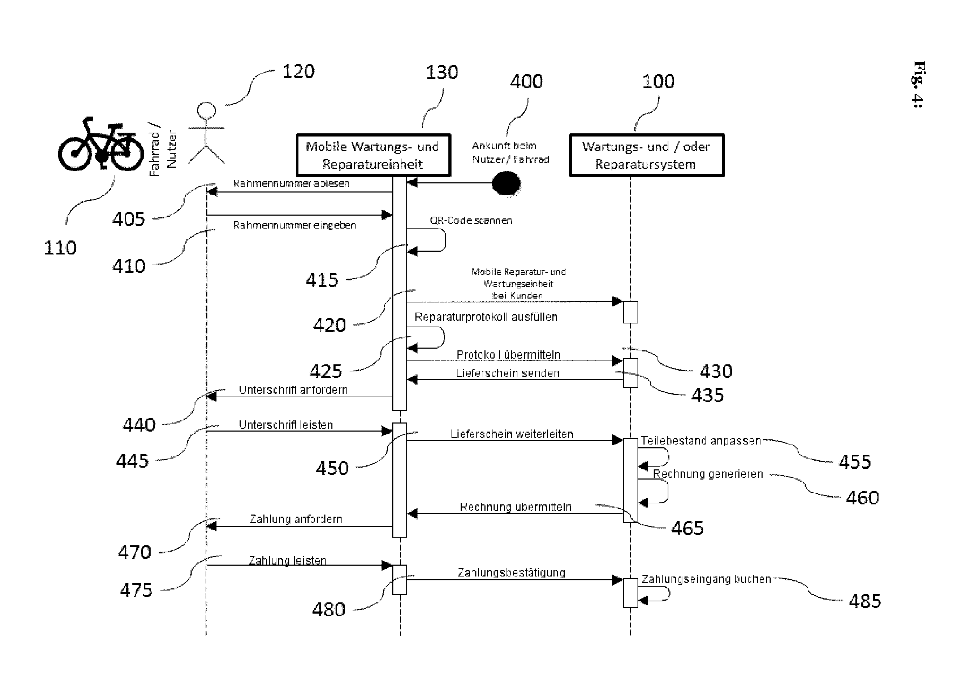

Fig. 4 beschreibt einen beispielhaften Ablauf eines Wartungs- und / oder Reparaturauftrags durch eine mobile Wartungs- und Reparatureinheit 130.

Nach Eintreffen der mobilen Wartungs- und Reparatureinheit 130 am gewünschten Ort, wird von dem zugehörigen Mechaniker die Rahmennummer des zu wartenden und / oder reparierenden Fahrrads 110 abgelesen 405. Dadurch kann der zugehörige Wartungs- und / oder Reparaturauftrag identifiziert werden. Dieser Schritt ist optional. Eingegeben 410 wird die Rahmennummer z. B. in ein auf einem Laptop, Tablet-PC oder Ähnlichem betriebenes Programm. Denkbar wäre z. B. auch der Betrieb des Programms auf einem Smartphone. Anschließend wird ein am Fahrrad 110 angebrachter Code, z.B. ein QR-Code, gescannt 415. Erst durch Scannen des Codes wird der mobilen Wartungs- und Reparatureinheit 130 die entsprechende Teileliste des Fahrrads 110 übermittelt. Möglich ist auch, dass die Teileliste bereits vorab auf das Laptop oder auf den Tablet-PC übertragen wurde. Diese würde dann erst nach Scannen des QR-Codes 210 einsehbar. Dies schafft einen weiteren Kontrollmechanismus, der sicherstellt, dass das korrekte Fahrrad 110 zur Wartung und / oder Reparatur aufgesucht wurde. Weiterhin wird dadurch sichergestellt, dass die mobile Wartungs- und Reparatureinheit 130 tatsächlich vor Ort ist. Zusätzlich wird diese Information direkt an das Wartungs- und / oder Reparatursystem 100 übertragen 420. Während der Durchführung der Wartung und / oder Reparatur wird von dem Mechaniker ein Reparaturprotokoll ausgefüllt 425. Das Protokoll wird vorzugsweise direkt in das Laptop oder den Tablet-PC oder Ähnlichem eingegeben. Dies ermöglicht eine direkte Übertragung 430 des Protokolls an das Wartungs- und / oder Reparatursystem 100, welches mit einer Übertragung eines Lieferscheins antworten kann 435.

Da die Ersatzteile bei Entnahme aus dem Lager einer mobilen Wartungs- und / oder Reparatureinheit 130 gescannt werden, wird zusätzlich erreicht, dass diese automatisiert in das Reparaturprotokoll eingetragen werden. Ein Mechaniker muss sich somit nicht um die Dokumentation der verbauten Teile kümmern. Weiterhin wird hierdurch verhindert, dass falsche Teile in eine spätere Rechnung eingetragen werden, da für ein Fahrrad 110 unpassende Teile von dem Wartungs- und / oder Reparatursystem 100 nicht als Rechnungsposten akzeptiert werden.

Das Ausfüllen des Protokolls wird durch den Einsatz eines Laptops, eines Smartphones oder eines Tablet-PCs besonders einfach. Die Eingabeergonomie wird beispielsweise durch Hervorhebung verbauter oder zu verbauender Teile, wie z.B. fette oder kursive Schrift, merklich verbessert. Wurde ein Teil bei Entnahme aus dem Lager der mobilen Wartungs- und / oder Reparatureinheit 130 gescannt, so wird es automatisch im Reparaturprotokoll vermerkt und hervorgehoben. Durch Anklicken der hervorgehobenen Teile kann ein Mechaniker den Verbau nochmals bestätigen. Durch die Hervorhebung wird auch hier einer Verwechslung bzw. dem Anklicken eines falschen Teils vorgebeugt. Zudem wird durch das Verfahren ein sukzessives Ausfüllen des Protokolls ermöglicht: Ein Mechaniker scannt ein Teil welches umgehend im Reparaturprotokoll hervorgehoben wird. Der Mechaniker kann nun das Teil verbauen und im Anschluss den Verbau des Teils durch Anklicken des Teils im Reparaturprotokoll bestätigen. Nun kann er ein weiteres benötigtes Teil dem Lager der mobilen Wartungs- und / oder Reparatureinheit 130 entnehmen und scannen. Nun wird wieder nur genau dieses Teil im Protokoll hervorgehoben und erneut durch Anklicken bestätigt usw.

Diese Automatisierung erleichtert auch insbesondere die im Anschluss durchzuführende Erstellung eines Lieferscheins, da dieser direkt aus dem Protokoll abgeleitet wird. Weiterhin werden erbrachte Serviceleistungen (wie z.B. das Reinigen der Fahrradkette etc.) nur abstrakt, z.B. in Form von Zeiteinheiten in dem Protokoll vermerkt. Die konkret durchgeführte Tätigkeit wird nicht vermerkt. Auch dies erleichtert dem Mechaniker die Arbeit der Dokumentation eines durchgeführten Auftrags und beugt zudem Fehlern beim Ausfüllen des Protokolls vor. Weiterhin ist in dem Wartungs- und / oder Reparatursystem 100 hinterlegt, wie viele Zeiteinheiten zum Verbau und / oder Austausch eines bestimmten Teils benötigt wird. Somit können die Zeiteinheiten entsprechend automatisiert in den Lieferschein und / oder in die Rechnung integriert werden.

Die oben beschriebene Feststellung von Gewehrleistungsfällen ermöglicht auch, dass Teile die im Rahmen einer erbrachten Gewährleistung verbaut oder repariert wurden, automatisiert von der Rechnungsstellung ausgeschlossen werden können.

Das Programm auf dem Laptop oder Tablet-PC oder Ähnlichem fordert nun umgehend nach Erhalt des Lieferscheins die Unterschrift des Nutzers 120 an 440. Daraufhin wird der Lieferschein von dem Nutzer 120 unterschrieben 445. Der unterschriebene Lieferschein, der auch Aufschluss über alle zur Wartung und / oder Reparatur verwendeten Teile und über die z.B. in Form von Zeiteinheiten dokumentierten Serviceleistungen gibt, wird nun an das Wartungs- und / oder Reparatursystem 100 weitergeleitet 450. In Reaktion auf den Erhalt des unterschriebenen Lieferscheins passt das Wartungs- und / oder Reparatursystem 100 den gespeicherten Teilebestand der mobilen Wartungs- und Reparatureinheit 130 im Schritt 455 an und generiert umgehend eine entsprechende Rechnung 460. Die Rechnung wird der mobilen Wartungs- und Reparatureinheit 130 übermittelt 465. Der zugehörige Mechaniker kann nun sofort die Zahlung der Rechnung von dem Nutzer 120 anfordern 470, dessen Fahrrad 110 gewartet und / oder repariert wurde. Dieser leistet nun z. B. mittels des mobilen Kartenlesegeräts die Zahlung 475. Die mobile Wartungs- und Reparatureinheit 130 übermittelt im Anschluss eine Zahlungsbestätigung 480 an das Wartungs- und / oder Reparatursystem 100, welches die Zahlung umgehend verbucht 485. Das Wartungs- und / oder Reparatursystem 100 speichert vorzugsweise jeden von einer mobilen Wartungs- und Reparatureinheit 130 durchgeführten Auftrag. Dadurch kann jederzeit festgestellt werden, wie viele Aufträge von einer mobilen Wartungs- und Reparatureinheit 130 durchgeführt wurden.

Der hier beschriebene Vorgang zur Durchführung einer Wartung und / oder Reparatur eines Fahrrads 110 erzwingt durch einfache technische Maßnahmen eine kaufmännisch korrekt abgewickelte Wartung und / oder Reparatur. In herkömmlichen Fahrradreparaturwerkstätten werden z. B. oftmals kein Reparaturprotokoll und kein Lieferschein erstellt und von einem Kunden unterschrieben.

Das beschriebene Verfahren macht durch die Wartung und / oder Reparatur eines Fahrrads 110 vor Ort eine Bereitstellung von Lagerflächen für eine große Anzahl von Fahrrädern 110 unnötig was zu einer erheblichen Kostensenkung des Betriebs einer Reparaturwerkstätte führt. Zusätzlich muss auch nicht für Diebstahlschutz der gelagerten, zu wartenden und / oder zu reparierenden Fahrräder 110 gesorgt werden, da eine Wartung und / oder Reparatur immer direkt beim Nutzer 120 durchgeführt wird. Auch dies ist gegenüber einer herkömmlichen Reparaturwerkstatt vorteilhaft.

Im Folgenden werden weitere bevorzugte Ausführungsformen der Erfindung beschrieben um das Verständnis derselben zu erleichtern:
1. Verfahren zur Wartung und / oder Reparatur zumindest eines Fahrrads (110) von einer Vielzahl von im Feld verteilten Fahrrädern (110) mit ersten Identifizierungsdaten, wobei das Verfahren die folgenden Schritte umfasst:
   a. Empfangen (140) einer Wartungs- und / oder Reparaturanfrage über ein Netzwerk, wobei die Anfrage die ersten Identifizierungsdaten des Fahrrads (110) umfasst;
   b. Versenden (150) eines Wartungs- und / oder Reparaturauftrags an eine mobile Wartungs- und Reparatureinheit (130) mit einer Angabe eines Orts, an dem das Fahrrad (110) zur Wartung und / oder Reparatur bereitsteht.
   c. Empfangen einer Bestätigung, dass die mobile Wartungs- und Reparatureinheit (130) an dem Ort eingetroffen ist.
2. Verfahren nach Ausführungsform 1, wobei der im Schritt b versandte Wartungs- und / oder Reparaturauftrag eine Identifizierung des Fahrrads (110) nicht ermöglicht.
3. Verfahren nach Ausführungsform 1 oder 2, wobei das Empfangen der Bestätigung das Empfangen zweiter Identifizierungsdaten des Fahrrads (110) umfasst.
4. Verfahren nach Ausführungsform 3, wobei die zweiten Identifizierungsdaten (210; 220) von einem Lesegerät durch maschinelles Lesen eines Identifizierungselements am Fahrrad erzeugt worden sind.
5. Verfahren nach Ausführungsform 3 oder 4, wobei das Verfahren ferner den Schritt des Bereitstellens einer Teileliste des identifizierten Fahrrads (110) in Erwiderung auf den Empfang der zweiten Identifizierung umfasst.
6. Verfahren nach einem der vorhergehenden Ansprüche, wobei das Verfahren ferner den Schritt des Empfangens einer Mitteilung über zumindest eines bei der Wartung und / oder Reparatur verwendeten Fahrradteils aufweist.
7. Ein Verfahren nach Ausführungsform 6, wobei die Mitteilung eine Teile- Identifikationsnummer des zumindest einen bei der Wartung und / oder Reparatur verwendeten Fahrradteils aufweist.
8. Verfahren nach Ausführungsform 7, wobei das Verfahren ferner den Schritt des Auswählens eines Austauschteils für das in der Mitteilung enthaltene, zumindest eine bei der Wartung und / oder Reparatur verwendete Fahrradteil umfasst.
9. Verfahren nach einem der vorhergehenden Ansprüche, wobei der Schritt b die Auswahl einer mobilen Wartungs- und Reparatureinheit (130) aus einer Mehrzahl von mobilen Wartungs- und Reparatureinheiten (130) anhand zumindest eines vorgegebenen Kriteriums umfasst.
10. Verfahren nach Ausführungsform 9, wobei das zumindest eine Kriterium eines oder mehrere der folgenden Kriterien umfasst:
   i Standorte der Mehrzahl von mobilen Wartungs- und Reparatureinheiten (130);
   ii Bestände der in der Mehrzahl von mobilen Wartungs- und Reparatureinheiten (130) vorhandenen Teile;
   iii. eine in der Wartungs- und / oder Reparaturanfrage enthaltene Zeitangabe, zu der die Wartung und / oder Reparatur durchgeführt werden soll.
11. Verfahren nach Ausführungsform 10, wobei das Kriterium ii ferner einen Typ und / oder das Fahrrad (110) berücksichtigt, der bzw. das durch die erste Identifizierung identifiziert worden ist.
12. Verfahren nach Ausführungsform 10 oder 11, wobei bei der Auswahl der mobilen Wartungs- und Reparatureinheit (130) das Kriterium ii die höchste Priorität aufweist, gefolgt vom Kriterium iii, gefolgt vom Kriterium i.
13. Verfahren nach einem der vorhergehenden Ansprüche, ferner aufweisend den Schritt des Empfangens einer Annahme (160) des Wartungs- und / oder Reparaturauftrags von der mobilen Wartungs- und Reparatureinheit.
14. Verfahren nach einem der vorhergehenden Ansprüche, wobei die Schritte des Empfangens und Versendens (150; 160) die Verwendung eines Mobilfunknetzwerks und / oder des Internets umfassen.
15. Wartung- und / oder Reparatursystem (100) für zumindest ein Fahrrad (110) von einer Vielzahl von im Feld verteilten Fahrrädern (110) mit ersten Identifizierungsdaten, wobei das Wartung- und / oder Reparatursystem (100) die folgenden Mittel umfasst:
   a. Empfangsmittel, eingerichtet zum Empfangen (140) einer Wartungs- und / oder Reparaturanfrage über ein Netzwerk, wobei die Anfrage die ersten Identifizierungsdaten des Fahrrads (110) umfasst;
   b. Versendemittel, eingerichtet zum Versenden (150) eines Wartungs- und / oder Reparaturauftrags an eine mobile Wartungs- und Reparatureinheit (130) mit einer Angabe eines Orts, an dem das Fahrrad (110) zur Wartung und / oder Reparatur bereitsteht.
   c. Empfangsmittel, eingerichtet zum Empfangen einer Bestätigung, dass die mobile Wartungs- und Reparatureinheit (130) an dem Ort eingetroffen ist.
16. Wartung- und / oder Reparatursystem (100) nach Ausführungsform 15, wobei das Wartung- und / oder Reparatursystem (100) ferner zur Durchführung eines Verfahrens nach einem der Ansprüche 1 - 14 ausgebildet ist.
17. Verfahren zum Betrieb einer mobilen Wartungs- und Reparatureinheit (130) für zumindest ein Fahrrad (110) von einer Vielzahl von im Feld verteilten Fahrrädern (110), wobei das Verfahren die folgenden Schritte umfasst:
   a. Empfangen (150) eines Wartungs- und / oder Reparaturauftrags von einem Wartungs- und / oder Reparatursystem (100) nach Ausführungsform 15 oder 16;
   b. Maschinelles Lesen eines Identifizierungselements (200) am Fahrrad (110) mit einem Lesegerät zum Erhalt von zweiten Identifizierungsdaten des Fahrrads (100); und
   c. Versenden von zweiten Identifizierungsdaten des Fahrrads (110) an das Wartungs- und / oder Reparatursystem (100) nach Ausführungsform 15 oder 16.
18. Verfahren nach Ausführungsform 17, wobei der im Schritt a empfangene Wartungs- und / oder Reparaturauftrag eine Identifizierung des Fahrrads (110) nicht ermöglicht.
19. Verfahren nach Ausführungsform 17 oder 18, wobei das Verfahren ferner den Schritt des Erhaltens einer Teileliste des identifizierten Fahrrads (110) in Erwiderung auf den Versand oder auf das maschinelle Ablesen der zweiten Identifizierung umfasst.
20. Verfahren nach Ausführungsform 19, wobei die Teilliste Teile-Identifikationsnummern umfasst.
21. Verfahren nach einem der Ansprüche 17 bis 20, wobei das Verfahren ferner den Schritt des Versendens einer Mitteilung über zumindest eines bei der Wartung und / oder Reparatur verwendeten Fahrradteils aufweist.
22. Ein Verfahren nach Ausführungsform 21, wobei die Mitteilung eine Teile-Identifikationsnummer des zumindest einen bei der Wartung und / oder Reparatur verwendeten Fahrradteils aufweist.
23. Verfahren nach einem der Ansprüche 17 - 22, ferner aufweisend den Schritt des Versendens (160) einer Annahme des Wartungs- und / oder Reparaturauftrags an das Wartungs- und / oder Reparatursystem (100).
24. Verfahren nach einem der Ansprüche 17 - 23, wobei die Schritte des Erhaltens und Versendens (150; 160) die Verwendung eines Mobilfunknetzwerks umfassen.
25. Verfahren nach einem der Ansprüche 17 - 24, wobei zumindest ein Fahrradteil, das von der mobilen Wartungs- und Reparatureinheit (130) verwendet wird, durch maschinelles Ablesen von Teile-Identifikationsdaten identifiziert wird.
26. Verfahren nach Ausführungsform 25 in Verbindung mit Ausführungsform 20, wobei die abgelesene Teile-Identifikationsnummer mit sich in der Teileliste befindlichen Teile-Identifikationsnummern verglichen wird.
27. Verfahren nach Ausführungsform 26, wobei bei einer Feststellung, dass die maschinell abgelesene Teile-Identifikationsnummer mit keiner der in der Teileliste gespeicherten Teile-Identifikationsnummern übereinstimmt, eine Benachrichtigung ausgegeben wird.
28. Mobile Wartungs- und Reparatureinheit (130) zur Wartung- und / oder Reparatur von zumindest einem Fahrrad (110) von einer Vielzahl von im Feld verteilten Fahrrädern (110) die folgenden Mittel umfasst:
   a. Empfangsmittel, eingerichtet zum Empfangen (150) eines Wartungs- und / oder Reparaturauftrags von einem Wartungs- und / oder Reparatursystem (100) nach Ausführungsform 15 oder 16;
   b. Lesegerät, eingerichtet zum Lesen eines Identifizierungselements (200) am Fahrrad (110) zum Erhalt von zweiten Identifizierungsdaten des Fahrrads (110); und
   c. Versendemittel, eingerichtet zum Versenden von zweiten Identifizierungsdaten des Fahrrad (110) an das Wartungs- und / oder Reparatursystem (100) nach Ausführungsform 15 oder 16.
29. Mobile Wartungs- und Reparatureinheit (130) nach Ausführungsform 28, wobei die Mobile Wartungs- und Reparatureinheit (130) ferner zur Durchführung eines Verfahrens nach einem der Ansprüche 17 - 27 ausgebildet ist.
30. Fahrrad (110) zur Verwendung mit einem Wartung- und / oder Reparatursystem (110) nach einem der Ansprüche 15 und / oder 16, aufweisend zweite Identifizierungsdaten, die maschinell mit einem Lesegerät lesbar sind.
31. Fahrrad (110) nach Ausführungsform 30, wobei die zweiten Identifizierungsdaten als einer oder mehrerer der vorliegenden Codes (210; 220) am oder im Fahrrad (110) bereitgestellt sind:
   i. ein Code in einem RFID-Chip;
   ii. ein Barcode (220);
   iii. ein QR-Code (210);
32. Fahrrad (110) nach Ausführungsform 30 oder 31, ferner aufweisend erste Identifizierungsdaten, die ohne ein Lesegerät lesbar am Fahrrad (110) angebracht sind.
33. Ein Computerprogramm mit Instruktionen zur Durchführung der Verfahren gemäß den Ansprüchen 1 bis 14 oder gemäß den Ansprüchen 17 - 27 umfasst.
34. Ein verteiltes Fahrrad-Instandhaltungssystem, umfassend eine Wartungs- und / oder Reparatursystem (100) gemäß einem der Ansprüche 15 bis 16 und mindestens eine mobile Reparatur- und Wartungseinheit (130) gemäß einem der Ansprüche 28 - 29, zur Reparatur für zumindest ein Fahrrad (110) nach einem der Ansprüche 30 - 32.

## Patentansprüche

1. Verfahren zur Wartung und / oder Reparatur zumindest eines Fahrrads (110) von einer Vielzahl von im Feld verteilten Fahrrädern (110) mit ersten Identifizierungsdaten, wobei das Verfahren die folgenden Schritte umfasst:
a. Empfangen (140) einer Wartungs- und / oder Reparaturanfrage über ein Netzwerk, wobei die Anfrage die ersten Identifizierungsdaten des Fahrrads (110) umfasst;
b. Versenden (150) eines Wartungs- und / oder Reparaturauftrags an eine mobile Wartungs- und Reparatureinheit (130) mit einer Angabe eines Orts, an dem das Fahrrad (110) zur Wartung und / oder Reparatur bereitsteht.
c. Empfangen einer Bestätigung, dass die mobile Wartungs- und Reparatureinheit (130) an dem Ort eingetroffen ist.

2. Verfahren nach Anspruch 1, wobei der im Schritt b versandte Wartungs- und / oder Reparaturauftrag eine Identifizierung des Fahrrads (110) nicht ermöglicht.

3. Verfahren nach Anspruch 1 oder 2, wobei das Empfangen der Bestätigung das Empfangen zweiter Identifizierungsdaten des Fahrrads (110) umfasst.

4. Verfahren nach Anspruch 3, wobei die zweiten Identifizierungsdaten (210; 220) von einem Lesegerät durch maschinelles Lesen eines Identifizierungselements am Fahrrad erzeugt worden sind.

5. Verfahren nach Anspruch 3 oder 4, wobei das Verfahren ferner den Schritt des Bereitstellens einer Teileliste des identifizierten Fahrrads (110) in Erwiderung auf den Empfang der zweiten Identifizierung umfasst.

6. Verfahren nach einem der vorhergehenden Ansprüche, wobei der Schritt b die Auswahl einer mobilen Wartungs- und Reparatureinheit (130) aus einer Mehrzahl von mobilen Wartungs- und Reparatureinheiten (130) anhand zumindest eines vorgegebenen Kriteriums umfasst.

7. Verfahren nach Anspruch 6, wobei das zumindest eine Kriterium eines oder mehrere der folgenden Kriterien umfasst:
i Standorte der Mehrzahl von mobilen Wartungs- und Reparatureinheiten (130);
ii Bestände der in der Mehrzahl von mobilen Wartungs- und Reparatureinheiten (130) vorhandenen Teile;
iii. eine in der Wartungs- und / oder Reparaturanfrage enthaltene Zeitangabe, zu der die Wartung und / oder Reparatur durchgeführt werden soll.

8. Wartung- und / oder Reparatursystem (100) für zumindest ein Fahrrad (110) von einer Vielzahl von im Feld verteilten Fahrrädern (110) mit ersten Identifizierungsdaten, wobei das Wartung- und / oder Reparatursystem (100) die folgenden Mittel umfasst:
a. Empfangsmittel, eingerichtet zum Empfangen (140) einer Wartungs- und / oder Reparaturanfrage über ein Netzwerk, wobei die Anfrage die ersten Identifizierungsdaten des Fahrrads (110) umfasst;
b. Versendemittel, eingerichtet zum Versenden (150) eines Wartungs- und / oder Reparaturauftrags an eine mobile Wartungs- und Reparatureinheit (130) mit einer Angabe eines Orts, an dem das Fahrrad (110) zur Wartung und / oder Reparatur bereitsteht.
c. Empfangsmittel, eingerichtet zum Empfangen einer Bestätigung, dass die mobile Wartungs- und Reparatureinheit (130) an dem Ort eingetroffen ist.

9. Verfahren zum Betrieb einer mobilen Wartungs- und Reparatureinheit (130) für zumindest ein Fahrrad (110) von einer Vielzahl von im Feld verteilten Fahrrädern (110), wobei das Verfahren die folgenden Schritte umfasst:
a. Empfangen (150) eines Wartungs- und / oder Reparaturauftrags von einem Wartungs- und / oder Reparatursystem (100) nach Anspruch 8;
b. Maschinelles Lesen eines Identifizierungselements (200) am Fahrrad (110) mit einem Lesegerät zum Erhalt von zweiten Identifizierungsdaten des Fahrrads (100); und
c. Versenden von zweiten Identifizierungsdaten des Fahrrads (110) an das Wartungs- und / oder Reparatursystem (100) nach Anspruch 8.

10. Verfahren nach Anspruch 9, wobei der im Schritt a empfangene Wartungs- und / oder Reparaturauftrag eine Identifizierung des Fahrrads (110) nicht ermöglicht.

11. Verfahren nach Anspruch 9 oder 10, wobei das Verfahren ferner den Schritt des Erhaltens einer Teileliste des identifizierten Fahrrads (110) in Erwiderung auf den Versand oder auf das maschinelle Ablesen der zweiten Identifizierung umfasst.

12. Verfahren nach einem der Ansprüche 9 - 11, wobei zumindest ein Fahrradteil, das von der mobilen Wartungs- und Reparatureinheit (130) verwendet wird, durch maschinelles Ablesen von Teile-Identifikationsdaten identifiziert wird.

13. Mobile Wartungs- und Reparatureinheit (130) zur Wartung- und / oder Reparatur von zumindest einem Fahrrad (110) von einer Vielzahl von im Feld verteilten Fahrrädern (110) die folgenden Mittel umfasst:
a. Empfangsmittel, eingerichtet zum Empfangen (150) eines Wartungs- und / oder Reparaturauftrags von einem Wartungs- und / oder Reparatursystem (100) nach Anspruch 8;
b. Lesegerät, eingerichtet zum Lesen eines Identifizierungselements (200) am Fahrrad (110) zum Erhalt von zweiten Identifizierungsdaten des Fahrrads (110); und
c. Versendemittel, eingerichtet zum Versenden von zweiten Identifizierungsdaten des Fahrrad (110) an das Wartungs- und / oder Reparatursystem (100) nach Anspruch 8.

14. Fahrrad (110) zur Verwendung mit einem Wartung- und / oder Reparatursystem (110) nach Anspruch 8, aufweisend zweite Identifizierungsdaten, die maschinell mit einem Lesegerät lesbar sind.

15. Ein Computerprogramm mit Instruktionen zur Durchführung der Verfahren gemäß den Ansprüchen 1 bis 7 oder gemäß den Ansprüchen 9 - 12 umfasst.
